# EUROPÄISCHE PATENTSCHRIFT

(11) **EP 0 527 376 B1**
(45) Veröffentlichungstag und Bekanntmachung des Hinweises auf die Patenterteilung: **10.12.1997**
(21) Anmeldenummer: 92112754.4
(22) Anmeldetag: 25.07.1992
(51) Int. Cl.: G03G 5/07, C09K 19/38, G03G 5/06

(54) **Organische Photoleiter mit flüssigkristallinen Eigenschaften**
Organic photoconductors with liquid crystalline properties
Photoconducteurs organiques ayant des propriétés cristallines liquides

(30) Priorität: 10.08.1991 DE 4126496
(43) Veröffentlichungstag der Anmeldung: 17.02.1993
(73) Patentinhaber: BASF Aktiengesellschaft, 67063 Ludwigshafen (DE)
(72) Erfinder: Closs, Friedrich, Dr., 68165 Mannheim (DE); Frey, Thomas, Dr., W-6834 Ketsch (DE); Funhoff, Dirk, Dr., W-6900 Heidelberg (DE); Siemensmeyer, Karl, Dr., W-6710 Frankenthal (DE); Ringsdorf, Helmut, Prof. Dr., W-6500 Mainz-Gonsenheim (DE); Haarer, Dietrich, Prof. Dr., W-8580 Bayreuth (DE); Strohriegl, Peter, Dr., W-8581 Hummeltal (DE)

(56) Entgegenhaltungen:
- DE-A- 3 334 056
- DE-A- 3 906 527
- DE-A- 3 907 095
- US-A- 5 030 533
- PATENT ABSTRACTS OF JAPAN vol. 014, no. 526 (C-0779) 19. November 1990 & JP-A-22 18 662

## Beschreibung

Die Erfindung betrifft Photoleiter aus niedermolekularen oder polymeren organischen Verbindungen mit flüssigkristallinen Eigenschaften. Die Erfindung betrifft insbesondere derartige organische Photoleiter mit flüssigkristallinen Eigenschaften, die im flüssigkristallinen Zustand eine erhöhte Photoleitfähigkeit aufweisen. Die Erfindung betrifft außerdem ein Verfahren zur Erhöhung der Photoleitung durch molekulare Ordnung, bei dem die Photoleitfähigkeit in geordneten flüssigkristallinen Systemen erhöht wird. Die Begriffe "Zustand" und "Phase" werden im folgenden gleichbedeutend verwendet.

Photoleitende Polymere sind eine interessante Materialklasse und werden in Kopierern, Laserdruckern und Offset-Druckplatten in großem Umfang technisch eingesetzt.

Es sind mehrere Versuche bekannt, die Ladungstransporteigenschaften flüssigkristalliner Materialien durch Orientierung im flüssigkristallinen Zustand zu verbessern. Hierzu gibt es zwei Ansätze.

Einmal werden niedermolekulare Flüssigkristalle, die bei Raumtemperatur nematische Phasen bilden, mit Carbazol dotiert. Hierbei ist die Aufnahmekapazität der flüssigkristallinen Matrix allerdings sehr beschränkt. Bereits bei sehr geringen Konzentrationen (wenige Gew.-%) beginnt das Carbazol zu kristallisieren. Dementsprechend gibt es nur einen geringen Photostrom der mit Carbazol dotierten Flüssigkristallproben (vgl. L.L. Chapoy, D.K. Munck, K.H. Rasmussen, E. Juul-Diekmann, R.K. Sethi, D. Biddle, in Molecular Crystals, Liquid Crystals, Vol. 105, S.353ff. (1984)).

Der zweite Ansatz ist in der EP-A 254 060 illustriert. Aus der EP-A 254 060 sind photoleitfähige Filme mit einer Dicke unterhalb 20 µm bekannt, die aus konzentrierten lyotropen Lösungen eines Polymers hergestellt werden, das eine Wiederholungseinheit gemäß allgemeiner Formel I aufweist, 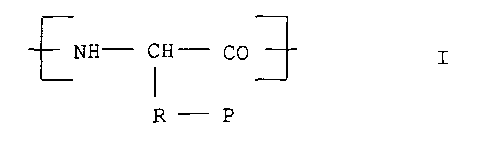 wobei R ein Alkylenradikal mit 1 bis 20 Kohlenstoffatomen und P eine photoleitfähige Gruppe ist.

Aufgabe der vorliegenden Erfindung war es nun, organische Photoleiter mit flüssigkristallinen Eigenschaften bereitzustellen, die im flüssigkristallinen Zustand eine höhere Photoleitfähigkeit aufweisen als im nicht-flüssigkristallinen.

Diese Aufgabe wird überraschend gelöst durch flüssigkristalline Photoleiter mit diskotischen Eigenschaften.

Gegenstand der Erfindung ist ein Verfahren zur Erhöhung der Photoleitfähigkeit in Photoleitern mit flüssigkristallinen Eigenschaften, daß dadurch gekennzeichnet ist, daß die Erhöhung der Photoleitfähigkeit durch Einstellung der diskotischen Phase erreicht wird.

Erfindungsgemäße einzusetzende niedermolekulare organische flüssigkristalline Photoleiter mit diskotischen Eigenschaften sind beispielsweise Triphenylen und seine Derivate, von denen die alkoxygruppen substituierten Triphenylenderivate bevorzugt sind, Phthalocyanine, hexasubstituierte Benzole sowie Truxene.

Erfindungsgemäße einzusetzende polymere organische Photoleiter sind solche, die in der Polymerkette oder über einen flexiblen Spacer an eine Polymerkette gebunden photoleitfähige Gruppen enthalten. Beispiele hierfür sind die in der US-A 4,865,762 beschriebenen Polysiloxane oder die Polymeren (A-1) bis (A-5): 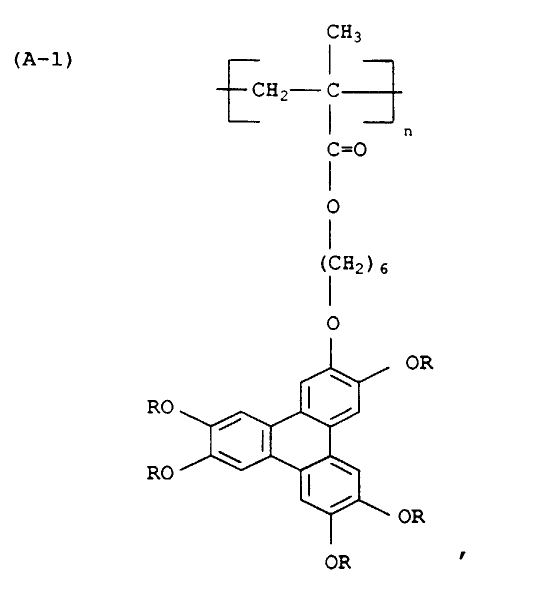 worin der Rest R n-Pentyl bedeutet; 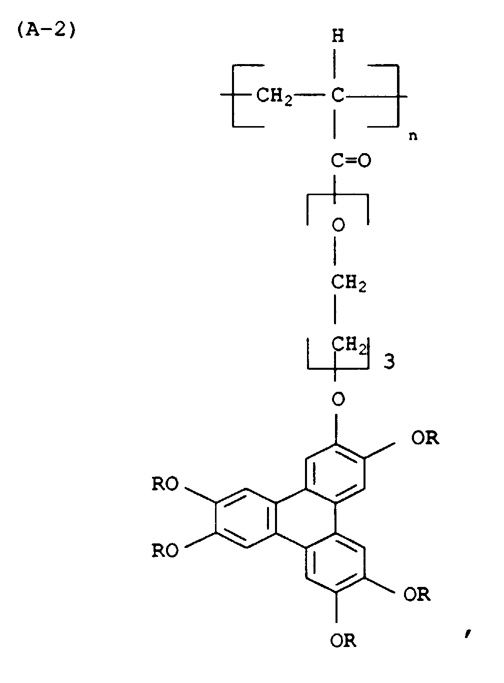 worin der Rest R 3,6-Dioxahept-1-yl bedeutet; sowie 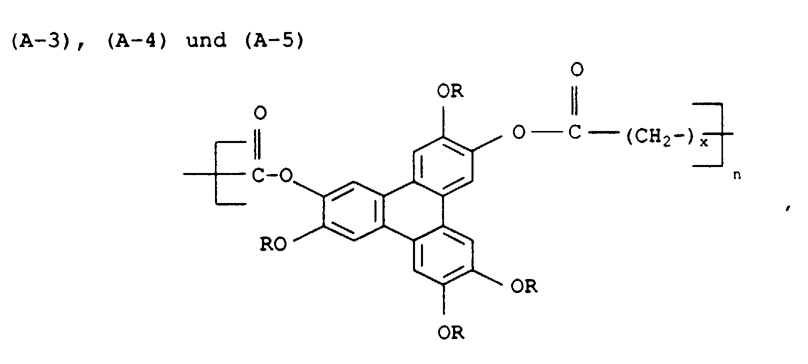 wobei der Index x die folgenden Werte hat:
Im Falle von (A-3) gleich 10,
im Falle von (A-4) gleich 14 und
im Falle von (A-5) gleich 20;
und wobei der Rest R in den Polymeren (A-3), (A-4) und (A-5) n-Pentyl bezeichnet.

Zur Erhöhung der Lichtempfindlichkeit der Schichten können Sensibilisatoren, d.h. ladungsträgererzeugende Verbindungen, zugesetzt werden. Verbindungen dieser Art sind z.B. die aus DE-A 22 37 539 und DE-A 31 10 955 bekannten Perylentetracarbonsäurederivate. Besonders bevorzugt ist der Zusatz von flüssigkristallinen Verbindungen als Ladungsträgererzeuger.

Ebenfalls möglich ist die Bildung von Charge-Transfer-Komplexen zur Ladungsträgererzeugung.

Erfindungsgemäß können in den Charge-Transfer-Komplexen die niedermolekularen oder polymeren organischen Verbindungen mit flüssigkristallinen Eigenschaften als Elektronendonoren oder als Elektronenakzeptoren wirken. In der Regel wirken die genannten niedermolekularen oder polymeren organischen Verbindungen mit flüssigkristallinen Eigenschaften als Elektronendonoren.

Ein besonders geeigneter niedermolekularer Elektronenakzeptor in den erfindungsgemäßen Charge-Transfer-Komplexen ist 2,4,7-Trinitrofluorenon. Ein weiterer geeigneter Elektronenakzeptor ist 2,4,7-Trinitrofluorenyliden-9-malonsäuredinitril.

Erfindungsgemäß besonders bevorzugte Charge-Transfer-Komplexe enthalten als Elektronendonor Hexapentyloxytriphenylen und als Elektronenakzeptor 2,4,7-Trinitrofluorenon.

Die in den erfindungsgemäßen Photoleitern vorliegenden niedermolekularen oder polymeren organischen Verbindungen sind an sich bekannt und nach üblichen Verfahren herstellbar (vgl. beispielsweise Angewandte Chemie, Band 101, S. 934ff. (1989), und Band 102, S. 1525ff. (1990), wo die Herstellung der Polymeren (A-1) bis (A-5) beschrieben ist).

Die erfindungsgemäßen Photoleiter werden in der Regel in Form von dünnen photoleitenden Schichten verwendet, wobei auch eine Trennung des Ladungstransports von der Ladungserzeugung im Sinne einer Zweischichten-Anordnung möglich sein kann, wie sie in der Elektrophotographie angewandt wird. Hierbei befindet sich der erfindungsgemäße Photoleiter in der photoleitfähigen Ladungstransportschicht, an die eine übliche und bekannte Ladungsträger erzeugende Sensibilisatorschicht angrenzt. Die Aufladung erfolgt hierbei in der Regel durch eine Hochspannungscorona.

Die Erzeugung der erfindungsgemäßen Schichten auf einer Trägeroberfläche kann durch Auftragen einer Schmelze oder in üblicher und bekannter Weise z.B. durch Aufrakeln einer Lösung der Verbindungen auf eine Trägeroberfläche erfolgen. Dabei können der Lösung verschiedene Hilfsstoffe, z.B. zur Verbesserung der Verlaufeigenschaften, zugesetzt werden.

Als Lösungsmittel werden beispielsweise Tetrahydrofuran oder Dichlormethan verwendet.

Diese photoleitenden Schichten haben im allgemeinen eine Schichtdicke zwischen 2 und 100, vorzugsweise zwischen 4 und 50 und besonders bevorzugt zwischen 4 und 30 µm.

Die Photoleiter bzw. die photoleitenden Schichten können zwischen leitfähig beschichteten, transparenten Substraten angeordnet werden, für die Glasplatten oder Platten aus optisch transparenten Kunststoffen (beispielsweise Polymethylmethacrylat, Polycarbonat etc.) verwendet werden. Die leitfähige Beschichtung des Substrats kann aus elektrisch leitfähigen Polymeren, Halbleitern oder Metallen bestehen. Die Dicke der Beschichtung ist hierbei allerdings so zu wählen, daß die optische Durchlässigkeit nicht zu sehr beeinträchtigt wird. Besonders vorteilhafte Beschichtungen bestehen aus ITO ("indium tin oxide").

Zur Erzeugung eines Photostromes wird hierbei an die elektrisch leitfähig beschichteten Platten im allgemeinen eine Gleichspannung zwischen 5 und 50 V angelegt.

Erfindungsgemäß wird der flüssigkristallin diskotische Zustand, in dem die Photoleitfähigkeit höher ist als im ungeordneten Zustand, eingestellt. Dies kann auf verschiedene Art und Weise erfolgen. Die Orientierung kann z.B. mechanisch (durch Strecken oder Scheren) oder durch elektrische oder magnetische Felder erreicht werden. Die Einstellung einer Orientierung ist auch mittels orientierender Unterschichten, die z.B. Polyimide enthalten oder aus diesen bestehen, möglich. Die einfachste Möglichkeit ist eine thermische Behandlung (Tempern).

Die erfindungsgemäßen Photoleiter und photoleitfähigen Filme können in der Elektrophotographie, in Laserdruckern, im Offsetdruck, oder aber in der Mikroelektronik für lichtempfindliche Schalter verwendet werden.

Darüberhinaus kann die Erfindung in all den Bereichen eingesetzt werden, in denen die Erhöhung der Photoleitfähigkeit durch molekulare Ordnung ausgenutzt werden kann.

### Beispiele

Die Beispiele 1 und 2 sind Beispiele für erfindungsgemäße Photoleiter und das erfindungsgemäße Verfahren zur Erhöhung der Photoleitfähigkeit. Beispiel 3 betrifft die Anwendung in der Elektrophotographie.

In den Beispielen 1 und 2 wurden die organischen Photoleiter wie folgt untersucht.

Die organischen Photoleiter wurden zwischen zwei elektrisch leitfähig beschichteten, transparenten Glasplatten einer Glas-Meßzelle angeordnet.

Der Abstand der Glasplatten wurde durch Abstandshalter zwischen 5 und 15 µm eingestellt. Über die leitfähige Schicht wurde eine Spannung an die Probe gelegt und der Strom gemessen.

Zur Messung befand sich die Glas-Meßzelle mit der zu untersuchenden Probenschicht in einem Mikroskopheiztisch, der über eine Heizungsregelung von Raumtemperatur bis 300°C mit konstanten Heizraten temperiert werden konnte. Die Zelle wurde senkrecht zur Probenoberfläche von einer Halogenglühlampe durch ein Fenster im Heiztischdeckel von ca. 5 mm Durchmesser bestrahlt (Intensität ca. 0.02 Watt/cm²). Der einfallende Lichtstrahl wurde durch einen Chopper ("Lichtzerhacker") mit einer Frequenz von 10 Hz moduliert, d.h. in Lichtpulse von 50 msec Länge bei ebenso langer Dunkelphase zerlegt.

Die Meßzelle war über ihre beiden Anschlußelektroden ( transparente ITO-Elektroden) in Serie mit einem Picoamperemeter an eine regelbare Spannungsquelle angeschlossen. Damit wurde an die Meßzelle 10 V Gleichspannung angelegt. Das Picoamperemeter maß den dadurch erzeugten elektrischen Strom durch die Probe, d.h. mit der Frequenz der Lichtmodulation abwechselnd den Dunkelstrom während der Dunkelphase der Beleuchtung bzw. die Summe aus Dunkel- und Photostrom während der Hellphase.

Das Analogausgangssignal des Picoamperemeters wurde auf einen Lock-In-Verstärker gegeben, der seine Referenzfrequenz vom Chopper erhielt. Hier wurde der mit der Modulationsfrequenz sich verändernde Spannungsanteil des Picoamperementerausgangs gemessen. Er war direkt proportional zur Differenz des gemessenen Zellenstromes in der Hell- bzw. Dunkelphase der Belichtung, und damit proportional zum Photostrom.

Zur temperaturabhängigen Messung des Photostromes wurde die Meßzelle im Heiztisch mit einer Heizrate von 5 °C/min bis in den isotropen Zustand aufgeheizt. Während dieses Temperaturzyklus war die vorstehend beschriebene Meßelektronik aktiv. Die Meßwerte des Lock-In-Verstärkers konnten am Gerät als Funktion der Temperatur abgelesen und in Einheiten des Photostromes umgerechnet werden.

Die gefundenen Meßwerte sind in der Tabelle dargestellt.

### Beispiel 1

Durch mehrfaches Umkristallisieren gereinigtes 2,3,6,7,10,11-Hexapentyloxytriphenylen (HPT) wurde in der Schmelze zwischen die beiden elektrisch leitfähig beschichteten, transparenten Glasplatten der Glas-Meßzelle (Schichtdicke: 8 µm) angeordnet und der Photostrom wie beschrieben beim Aufheizen bis auf 125°C gemessen. Die gefundenen Meßwerte sind in der Tabelle dargestellt.

**Tabelle**

| Temperatur [°C] | Photostrom [nA] |
|---|---|
| 45 | 0,5 |
| 50 | 0,5 |
| 55 | 0,5 |
| 60 | 0,5 |
| 65 | 1,4 |
| 70 | 4,6 |
| 75 | 4,5 |
| 80 | 5,1 |
| 85 | 6,4 |
| 90 | 7,8 |
| 95 | 9,1 |
| 100 | 10,8 |
| 105 | 12,2 |
| 110 | 13,4 |
| 115 | 14,4 |
| 120 | 17,0 |
| 125 | 2,7 |

Wie sich aus der Tabelle ergibt, ist im diskotisch-flüssigkristallinen Bereich der Probe, d.h. zwischen 60 und 125°C, der Photostrom erhöht ( Maximum bei 120°C in der Aufheizperiode). Die Literaturwerte für die Phasenübergänge von HPT sind 69°C für den Übergang vom kristallinen in den diskotischen Zustand und 122°C für den Übergang vom diskotischen in den isotropen Zustand (vgl. J.Billard, J.C.Dubois, Nguyen Huu Tinh, A. Zann, Nouveau Journal de Chimie, Band 2, Seiten 535ff. (1978)).

### Beispiel 2

Durch mehrfaches Umkristallisieren gereinigtes HPT wurde in Dichlormethan gelöst und mit 1 Gew.-%, bezogen auf die Mischung, 2,4,7-Trinitrofluorenon (TNF) versetzt. Nach 10-minütigem Rühren wurde das Lösungsmittel vollständig abgedampft. Die erhaltene Masse wurde geschmolzen und wie in Beispiel 1 zwischen zwei elektrisch leitfähig beschichtete, transparente Glasplatten angeordnet (Schichtdicke: 5 µm). Die Phasenübergangstemperaturen wurden zu 66,5°C für den Übergang vom kristallinen in den diskotischen Zustand und zu 126°C für den Übergang vom diskotischen in den isotropen Zustand bestimmt.

Die analog zu Beispiel 1 durchgeführten Messungen ergaben ein qualitativ gleiches Ergebnis. Die Photoleitung war in der diskotischen Phase deutlich höher als in den nicht-flüssigkristallinen Phasen.

### Beispiel 3

### Elektrophotographisches Aufzeichnungsmaterial

Zur Herstellung einer ladungsträgererzeugenden Schicht wurden 5 g des Sensibilisators N,N'-Bis-(2',6'-dichlorphenyl)-perylen-3,4,9,10-tetracarbonsäurediimid (vgl. DE-A 31 10 955) mit 3 g eines Copolymerisats aus Vinylchlorid, Acrylsäure und einem Maleinsäurediester und 25 g Tetrahydrofuran vermischt und mehrere Stunden in einer Kugelmühle auf einem Walzenstuhl gerollt. Danach wurden 75 g Tetrahydrofuran und 25 g Toluol zugesetzt. Das Gemisch wurde eine weitere Stunde auf dem Walzenstuhl homogenisiert.

Die so erhaltene Dispersion wurde mit einer Rakel (Gießspalt 60 µm) auf ein unbehandeltes Aluminiumblech aufgetragen. Nach der Trocknung verblieb eine Trockenschichtdicke von ca. 0,8 µm.

Auf diese ladungsträgererzeugende Schicht wurde die Photoleiter-Schicht aufgetragen. Dazu wurde eine 15 Gew.-%ige Lösung eines Triphenylen-Polysiloxans (mit C₁₁-Spacer, vgl. W. Kreuder und H. Ringsdorf, in Macromolecular Chemistry, Rapid Communications, Vol. 4, S. 4ff., (1983) sowie US-A 4,8 65,7 62) in Tetrahydrofuran hergestellt. Die Phasenübergangstemperaturen betrugen -19°C für den Übergang vom Glaszustand in den diskotischen Zustand und 39°C für den Übergang vom diskotischen in den isotropen Zustand. Die Lösung wurde mittels einer Rakel (Gießspalt 150 µm) auf die wie beschrieben hergestellte ladungsträgererzeugende Schicht aufgebracht. Nach Trocknung verblieb eine Schicht mit einer Schichtdicke von ca. 8 µm. Zur Verbesserung der Orientierung in der Schicht wurde das Blech für mehrere Tage bei 30°C gelagert.

Das auf diese Weise hergestellte elektrophotographische Aufzeichnungsmaterial konnte in üblicher und bekannter Weise mit einer Hochspannungscorona aus einem Abstand von 1 cm auf ein Potential von - 650 V aufgeladen werden. Anschließend wurde es durch eine Negativvorlage hindurch bildmäßig belichtet, wodurch ein latentes Ladungsbild erzeugt wurde. Dieses konnte in üblicher Art und Weise betonert werden. Anschließend wurde das Tonerbild auf Papier übertragen und darauf fixiert. Das übertragene und fixierte Tonerbild gab die Motive der Negativvorlage detailgetreu wieder.

## Patentansprüche

1. Verfahren zur Erhöhung der Photoleitfähigkeit in Photoleitern mit flüssigkristallinen Eigenschaften, dadurch gekennzeichnet, daß die Erhöhung der Photoleitfähigkeit durch Einstellung der diskotischen Phase erreicht wird.

2. Verfahren nach Anspruch 1, dadurch gekennzeichnet, daß die Einstellung der diskotischen Phase durch eine thermische Behandlung vorgenommen wird.

3. Verfahren nach Anspruch 1 oder 2, dadurch gekennzeichnet, daß als Photoleiter mit flüssigkristallinen Eigenschaften Triphenylen oder ein Triphenylenderivat eingesetzt wird.

4. Elektrophotographisches Aufzeichnungsmaterial, bestehend aus einem elektrisch leitenden Schichtträger und einer photoleitfähigen Schicht, dadurch gekennzeichnet, daß die photoleitfähige Schicht nach einem Verfahren gemäß einem der vorhergehenden Ansprüche erhalten worden ist.

5. Elektrophotographisches Aufzeichnungsmaterial, bestehend aus einem elektrisch leitenden Schichtträger, einer Ladungsträger erzeugenden Sensibilisatorschicht und einer photoleitfähigen Schicht, dadurch gekennzeichnet, daß die photoleitfähige Schicht nach einem Verfahren gemäß einem der Ansprüche 1 bis 3 erhalten worden ist.

## Claims

1. A method for increasing the photoconductivity in photoconductors with liquid crystal properties, which comprises the increase in the photoconductivity being achieved by adjusting the discotic phase.

2. A method as claimed in claim 1, wherein the adjustment of the discotic phase is carried out by thermal treatment.

3. A method as claimed in claim 1 or 2, wherein triphenylene or a triphenylene derivative is employed as photoconductor with liquid crystal properties.

4. An electrophotographic recording material composed of an electrically conducting backing layer and a photoconducting layer, wherein the photoconducting layer has been obtained by a method as claimed in any of the preceding claims.

5. An electrophotographic recording material composed of an electrically conducting backing layer, of a sensitizer layer generating charge carriers, and of a photoconducting layer, wherein the photoconducting layer has been obtained by a method as claimed in any of claims 1 to 3.

## Revendications

1. Procédé pour accroître la photoconductivité de photoconducteurs ayant des propriétés de cristaux liquides, caractérisé par le fait que l'on accroît la photoconductivité par réglage de la phase discotique.

2. Procédé selon la revendication 1, caractérisé par le fait que le réglage en phase discotique est provoqué par un traitement thermique.

3. Procédé selon la revendication 1 ou 2, caractérisé par le fait que l'on utilise, en tant que photoconducteurs à propriétés de cristaux liquides, le triphénylène ou un dérivé du triphénylène.

4. Matériau d'enregistrement électrophotographique consistant en un support de couches conducteur de l'électricité et une couche photoconductrice, caractérisé par le fait que la couche photoconductrice a été obtenue par un procédé selon l'une des revendications qui précèdent.

5. Matériau d'enregistrement électrophotographique consistant en un support de couches conducteur de l'électricité, une couche de sensibilisant produisant des porteurs de charge et une couche photoconductrice, caractérisé par le fait que la couche photoconductrice a été obtenue par un procédé selon une des revendications 1 à 3.
